# EUROPEAN PATENT APPLICATION

(11) **EP 3 173 943 A1**
(43) Date of publication of application: **31.05.2017**
(21) Application number: 15306864.8
(22) Date of filing: 25.11.2015
(51) Int. Cl.: G06F 17/30

(54) **SYSTEM, METHOD AND COMPUTER PROGRAM PRODUCT FOR TRANSFERRING THREE-DIMENSIONAL MODELS**

(71) Applicant: Kubity, 75008 Paris (FR)
(72) Inventor: GORA, Romain, 92600 ASNIERES-SUR-SEINE (FR); VASSEUR, Nicolas, 92700 COLOMBES (FR); GONZALEZ LOPEZ, Adrian, 75013 PARIS (FR)
(74) Representative: Lopez, Frédérique

(57) **Abstract**

A computer-implemented method of transferring a 3D model displayed on a mobile device to a target device is disclosed. The method comprises the steps of detecting at a mobile device a trigger operation for activating a model transfer application to transfer a 3D model, scanning by the mobile device a matrix barcode displayed at a target device, decoding a session identifier from the matrix barcode scan, initiating a transfer session with a remote server using the session identifier and a model identifier of the 3D model, and downloading to the target device model files associated to the model identifier from the remote server.

## Description

### Field of the Invention

The present invention relates to the field of data transfer and more particularly to a system, method and computer program product for transferring three-dimensional models from a mobile device to a desktop terminal using matrix barcode.

### Background Art

In the internet era, the use of mobile devices, such as smart phones and the like, has become a common way to obtain information, and share various experience with other users through social networking applications, would it be for personal or professional interest.

Such shared applications on the internet include the use of three-dimensional (3D) images or models. A requirement to have interactive experience with 3D models is to have a dedicated application installed on the computer that is capable of reading, displaying the 3D model for providing a real-time rendering. Desktop computers, Personal computers are computer terminals particularly adapted to offer high computing performances for 3D rendering.

While the technologies of mobile devices have rapidly increased, and 3D models may be displayed on these latter, they still suffer technology limitations to achieve an interactive experience. And there is the need of transferring 3D models to computer terminals to achieve the interactive experience.

The present invention offers a solution to this need.

### Summary of the invention

Accordingly, an object of the invention is to provide a method for transferring 3D models from mobile devices to computer terminals.

Advantageously, the method allows a seamless transfer of a 3D model from a mobile device to a web browser of a computer terminal.

Advantageously, the method is applicable for transferring any type of digital resource from a mobile device to a web browser of a computer terminal.

Still advantageously, the method may be used for transferring a 3D model or a digital resource from a mobile device to another mobile device.

It is an object of the invention to provide a method for transferring 3D models from mobile devices to web browsers of computer terminals without the need of establishing a prior association between a computer terminal and a mobile device.

Advantageously, the proposed method is very fast that does not involve intermediary steps as is known in common transfers, such as sending emails, providing logins and passwords, or typing complex URLs.

An advantage of the present invention is to minimize the sending of data from the mobile device which only sends a simple, low populated request to a server, mentioning a session identifier and a model identifier.

To achieve the foregoing object, a system, method and computer program product as further described in the appended independent claims 1, 12 and 13 are provided.

Particularly, a computer-implemented method of transferring to a target device a 3D model displayed on a mobile device, comprises the steps of:
- detecting at a mobile device a trigger operation for activating a model transfer application to transfer a 3D model;
- scanning by the mobile device a matrix barcode displayed at a target device;
- decoding a session identifier from the matrix barcode scan;
- initiating a transfer session with a remote server using the session identifier and a model identifier of the 3D model; and
- downloading to the target device model files associated to the model identifier from the remote server.

Further aspects of the invention will now be described, by way of preferred implementation and examples, with reference to the accompanying figures.

### Brief description of the drawings

The above and other items, features and advantages of the invention will be better understood by reading the following more particular description of the invention in conjunction with the figures wherein:
Fig. 1 illustrates transfer of a 3D model from a mobile device to a web browser computer terminal in accordance with an embodiment of the present invention;
Fig. 2 illustrates a general environment to operate the present invention;
Fig. 3 is a flow diagram of the process for transferring a 3D model in accordance with an embodiment of the present invention;
Fig. 4 is a flow diagram of the process for transferring a 3D model in accordance with another embodiment of the present invention;
Fig. 5 is a flow diagram of the process for generating a matrix barcode in accordance with an embodiment of the present invention;
Fig.6 is a flow diagram of the process for generating a matrix barcode in accordance with another embodiment of the present invention.

### Detailed description of the invention

It is to be appreciated that same elements are referenced by same numerals throughout all figures.

Embodiments of the invention are generally directed to systems, methods, and computer program products for transferring 3D models from mobile devices to web browsers of computer terminals.

The following terms shall have, for the purposes of this application, the respective meanings set forth below.

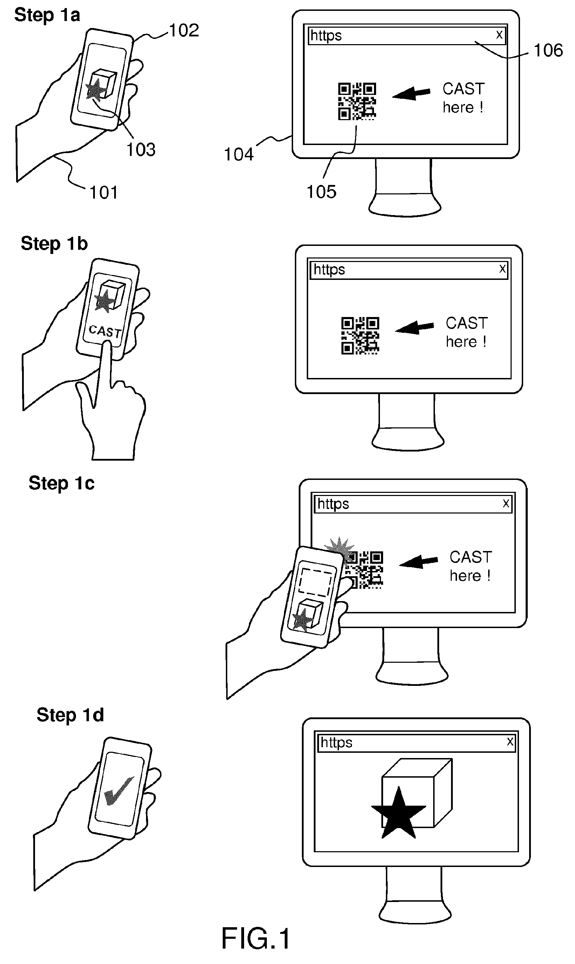

A "computer terminal" refers to a device such as device (104) depicted in FIG. 1 that includes processing component and tangible, computer-readable memory. Examples of computer terminal include personal computers (PC), gaming systems, televisions, mobile computers used as a fixed desktop computer. In the following description, a computer terminal is named a 'target device' or 'desktop computer' or 'desktop terminal'.

A "mobile device" refers to a device such as device (102) depicted in FIG. 1 that is generally portable in size and nature. Examples of mobile devices include pagers, cellular phones, feature phones, smart phones, personal digital assistants (PDAs), cameras, tablet computers, phone-tablet hybrid devices, laptop computers, notebooks, ultrabooks, global positioning satellite (GPS) navigation devices, media players, watches and the like. In a preferred embodiment, the mobile device is equipped with an embedded camera.

A "data matrix code" is a pattern, such as for example pattern (105) depicted in FIG. 1 that can include, without limitation, two-dimensional (2D) barcodes or quick response codes (QR code®) and the like. The data matrix code may be of any geometric shape or size. In the following description, the "data matrix code" is generally referenced as a "matrix barcode".

FIG. 1 illustrates through views 1 (a) to 1 (d) a transfer of a 3D model (103) from a mobile device (102) to a target device (104) in accordance with an embodiment of the present invention. As seen on view 1 (a), the mobile device is operated by a user (101) who may enter different commands in various modes, as typed commands or voice commands for example. As exemplified by star-cube, a model (103) is stored on mobile device. The mobile device may have internet access, and a mobile application installed allowing to display 3D models. The model may have been previously downloaded from a remote storage location or from file storage in the cloud. On the target device side (104), the computer must have internet connectivity and at least a web browser installed to browse a web page and display the website (106) of the model transfer service. The model transfer service, also herein called 'CAST' service, generates a matrix barcode (105) that is displayed on the target device screen.

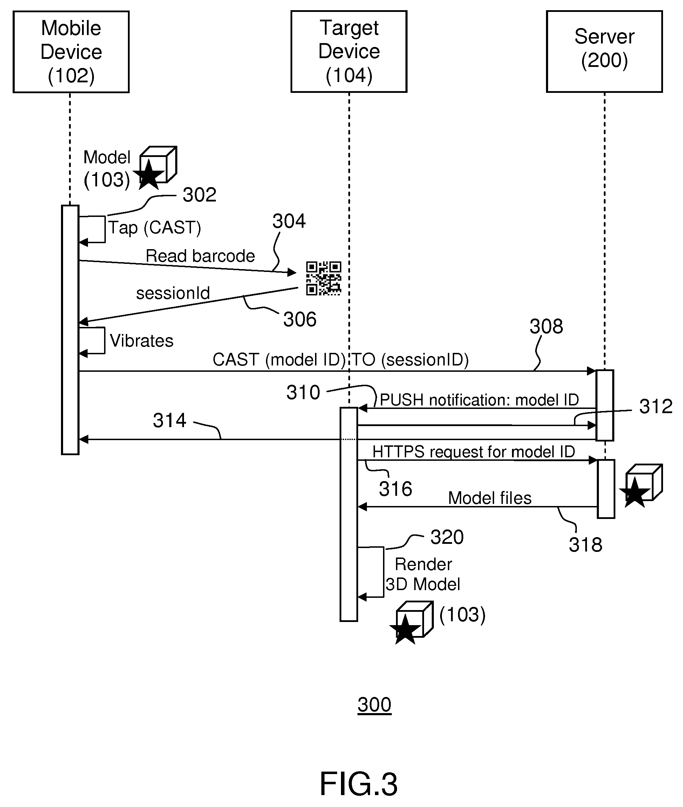

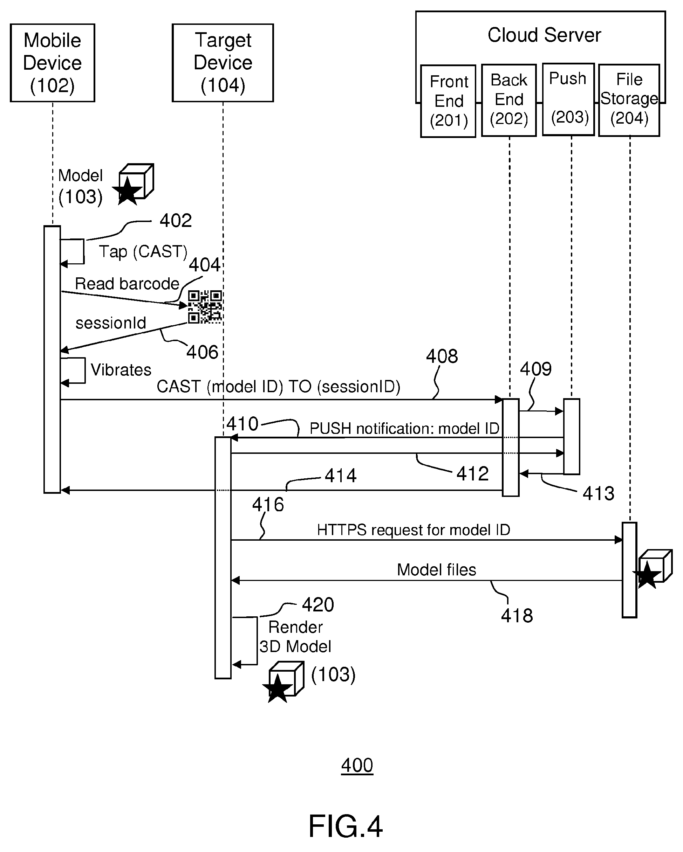

As seen on view 1 (b), the user may select the CAST service on the mobile device, either by tapping on an icon or selecting the service in a menu for example, to allow starting a 3D model transfer. The selection of the CAST service allows the mobile device to activate a barcode reader, such as a camera. The user may then, as seen on view 1 (c), manipulate the mobile device, in particular the camera associated with the mobile device, to take a picture or scan the matrix barcode (105) displayed on the screen of the target device. As further detailed with reference to figures 3 and 4, reading the matrix barcode allows the 3D model of the mobile device (102) be transferred to the target device (104). Then as seen on view 1 (d), the target device's screen displays the 3D model. A user of the target device may have an interactive experience of the received 3D model, using a web player application installed. The interactive experience may also be further enhanced by using a virtual reality headset connected to the target device.

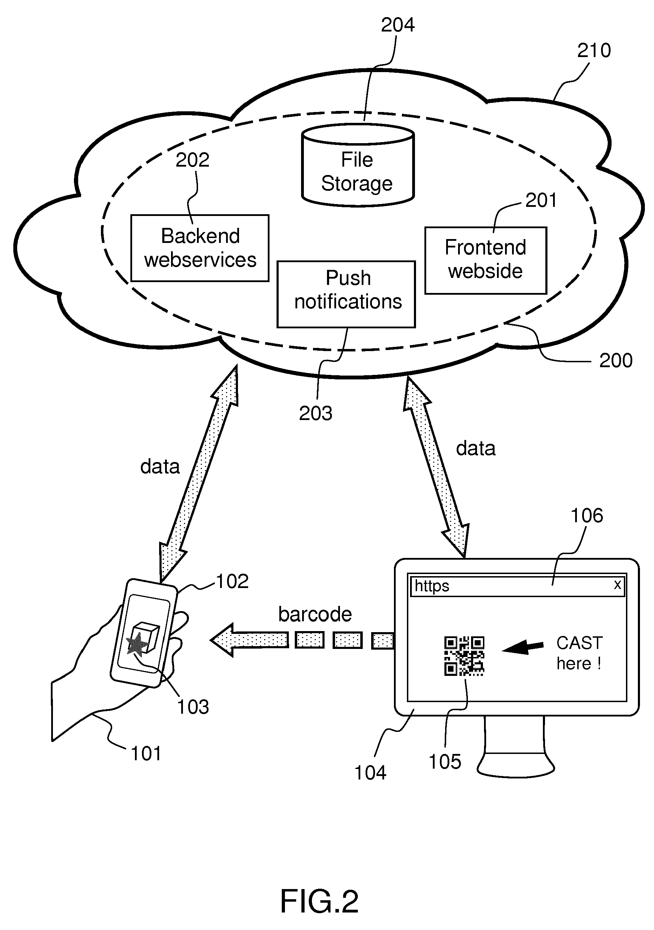

With reference to FIG. 2, an example of a general environment to operate the present invention is described. A target device (104) includes at least one processor and a memory coupled to the processor. The memory may represent a random access memory (RAM) as well as any supplemental levels of memory, e.g., cache memories, non-volatile or backup memories (e.g., programmable or flash memories), read-only memories, etc. In addition, memory may be considered to include memory storage physically, e.g., any cache memory in a microprocessor, as well as any storage capacity used as a virtual memory, e.g., as stored on a mass storage device or on another computer coupled to the target device. For interface with a user, the target device may include a user interface incorporating one or more user input/output devices, e.g., a keyboard, a pointing device, a display, a printer, etc. The target device may be in communication with one or more mass storage devices, which may be, for example, internal hard disk storage devices, external hard disk storage devices, external databases, storage area network devices, etc. The target device may have the ability to connect to a communications network (210) that enables communication, transfer and exchange of data with distant servers and/or computers of the so-called cloud communities. The target device may also include a graphic card having a video random access memory (VRAM), for computing a final rendering of a 3D model and for displaying it on the computer display. The target device typically operates under the control of an operating system and executes or otherwise relies upon various computer software applications, components, programs, objects, modules, engines, data structures, etc. In particular, the components and applications may include a 3D model component that may contain 3D models created from a local native application or 3D models received through the 3D model transfer process of the present invention. The target device has a web browser installed to access a webpage (106) of the model transfer service. The model transfer service allows generating a matrix barcode (105) on request of the target device. The matrix barcode is displayed on the target device screen to be further read by a mobile device (102).

A matrix barcode is commonly used to retrieve data from a barcode display (on paper, on computer screen) for a mobile device that flashes the barcode. On contrary, with the CAST service of the present invention, the matrix barcode is used to send data from the mobile device that reads it, to the barcode platform (the target device) that displays it.

A matrix barcode is built as a graphical representation of a digital computer character string, which includes the information to enable the CAST transfer of the present invention. The character string is a URL containing the full internet domain name of the model transfer service, and a session ID encoded as URL parameter. The session ID is dynamically generated by the service, it temporarily uniquely identifies the target device in a service's server database, and serves as a registration key. In a preferred embodiment, the information encoded in the session ID of the matrix barcode is limited to allow the mobile device to decode it rapidly.

The types of communications networks that may be used in accordance with the invention are not limited in any manner, and may include, private and/or public networks, e.g. the intranet or the internet, a wide area network (WAN), local area networks (LAN), wireless local area networks (WLAN), storage area networks (SAN) and/or the like. The communications network may be coupled to servers generally referenced as server (200) executing server computer programs to implement web-communication server functions for operating the model transfer. The servers, may include components to operate various functions such as frontend website (201), backend web services (202), push notifications (203), file storage (204) operating as further detailed with reference to figure 4. Advantageously, a mobile device (102) and a target device (104) are not in direct communication, meaning that no specific WiFi setup, nor Bluetooth setup are necessary to operate a model transfer. The transfer from a mobile device to a target device may be operated via secure remote servers.

While the example of figure 2 shows one target device displaying a matrix barcode, the environment to operate the invention may have a plurality of target devices each displaying a respective matrix barcode, each matrix barcode having an assigned session ID identifying the target device. Alternatively, one target device may have two or more opened web browser pages or several different web browsers in use. In these cases, one session ID is attached to each matrix barcode of each web browser page or to each web browser.

Although not depicted in FIG. 2, a particular application of the method of the present invention is the conferencing environment wherein a plurality of users (101) having each a mobile device (102) storing one or several 3D models (103). Each user may have the capability to scan a matrix barcode displayed on a screen of a target device that is shared among the users. The target device (104) may be connected to a video projector in a conference room to have the matrix barcode (105) displayed such that it can be read, scan, from any mobile device in the room. A speaker may ask a member (101) of the audience to transfer the model (103) of his/her mobile device (102). The user initiates the model transfer service by reading the matrix barcode from the screen to have the model be transferred to the target device. The members of the audience may then view the 3D model displayed on the screen while the speaker may interactively controls it with a web player application installed on the target device.

It is an advantage of the present invention that a user does not need to have any administrator privilege on the target device. The target device requires only a web browser with internet access capabilities.

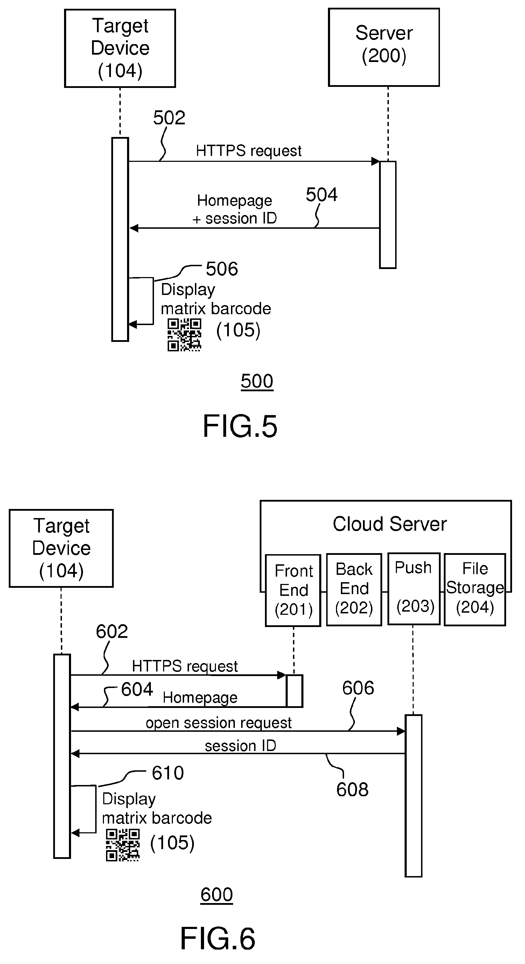

Fig. 3 is a flow diagram of the method (300) for transferring a 3D model (103) from a mobile device (102) to a target device (104) in accordance with an embodiment of the present invention. The data flow (300) may be associated for example with the system described in figure 2. The method begins when a user (101) wishes to transfer a 3D model (103) from his/her mobile device (102) to a target device (104) which displays a matrix barcode (105). The matrix barcode may have been previously generated as illustrated on process (500) of figure 5, where the target device (104) generates and sends a request (502) to a server (200) to gain access to the website of the model transfer service. Advantageously, the request is a secure request, in the form of well-known HTTPS requests, and the server has capabilities to process such request to provide an access to the website. The server further sends back (504) to the target device a session identifier (ID). The target device may comprise an encoding module to encode the session identifier in a matrix barcode (105). The target device, in its web browser, dynamically encodes the session identifier in a matrix barcode. The matrix barcode is then displayed (506) in the web browser installed on the target device.

Returning to figure 3, the user initiates a model transfer by selecting on step (302) an appropriate command, e.g. tapping on an icon available on the mobile screen. In next step (304), the matrix barcode (105) in the field of view of the mobile device is scanned. The mobile device may have an application program installed thereon to decode the content of matrix barcode and extract on step (306) the session identifier.

On step (308), a request to initiate the model transfer is built at the mobile device and sent to the server. The request contains at least two parameters, the first parameter being the session ID extracted from the matrix barcode, the second parameter being a model identifier "model ID" of the model currently opened and displayed on the mobile device.

In a variant where the model transfer application is not yet installed on the mobile device, the matrix barcode is interpreted as the URL of the web page of the service, and the user is offered to install the application on the mobile device before proceeding with the CAST service as explained in step (308).

Upon reception of the session identifier, the server delivers on step (310) a push notification to the target device providing the model identifier.

The target device sends back an acknowledgment on step (312). Receiving the acknowledgement, the server may send a message on step (314) to the mobile device to inform of the correct reception by the target device of the model identifier.

On a next step (316), the target device sends a request to the server to obtain the model files associated to the model identifier. The request is preferably an HTTPS request.

The server then sends on step (318) the model files to the target device. The model files contain data as well-known by the skilled person for building a 3D model having at least data for the geometry model (vertices, triangles, etc.), data representing the textures, and optional metadata like a model title, a model author for example.

On a subsequent step (320), the model files are used as input of a 3D rendering web engine, which displays the 3D model on the web browser of the target device.

Turning to Fig. 4, a flow diagram of the process for transferring a 3D model (103) in accordance with another embodiment of the present invention is described. The method begins when a user (101) wishes to transfer a 3D model (103) from his/her mobile device (102) to a target device (104) which displays a matrix barcode (105). The matrix barcode may have been previously generated as illustrated on process (600) of figure 6, where the web server may be composed of various components (201 to 204) of a cloud server. As illustrated, the target device (104) generates and sends a request (602) to a front end component (201) to gain access to the website of the model transfer service. Advantageously, the request is HTTPS request processed by the front end component to provide an access to the website of the model transfer service (step 604). The target device next sends a request (step 606) to a push notification component (203) of the cloud server to open a session. The push notification component delivers (step 608) a push notification to the target device including a session identifier (ID). As previously described, the target device, in its web browser, dynamically encodes the session identifier in a matrix barcode (105). The matrix barcode is then displayed (610) in the web browser installed on the target device (104).

Returning to figure 4 on step (402), a user initiates a model transfer by selecting an appropriate command on the mobile screen. In next step (404), the matrix barcode (105) in the field of view of the mobile device is scanned, and a session identifier is extracted (step 406).

On a next step (408), a request to initiate the model transfer is build at the mobile device end sends to the back end component (202) of a web server. As previously described, the request contains the session ID extracted from the matrix barcode and a model ID of the model currently opened and displayed on the mobile device.

The back end component binds (step 409) the request received from the mobile device to a push notification component (203). The push notification component is a web server component that has the capability to deliver thru a push notification data to the target device's web browser, immediately when this data becomes available. The push notification operating mode is different from a traditional HTTP 1.x request/response conversation in which a server only delivers data in response to an explicit browser request or client request. It is an advantage of the present invention to use a push notification to notify the target device. The implementation details of the push notification component may include, without being restricted to, active repetitive polling or "long polling" by the client techniques, or HTTP 2.x server push technologies, or mobile network carrier communication channels.

On a next step (410), the server delivers a push notification to the target device providing the model identifier.

The target device sends back an acknowledgment on step (412) to the push notification component which binds it (step 413) to the back end component. The back end component sends a message on a next step (414) to the mobile device to inform of the correct reception by the target device of the model identifier.

On a next step (416), the target device sends a request to a file storage component (204) of a web server to obtain the model files associated to the model identifier. The request is preferably an HTTPS request.

The server then sends on a next step (418) the model files to the target device. On a subsequent step (420), the model files are used as input of a 3D rendering web engine, which displays the 3D model (103) on the web browser of the target device (104).

Fig.6 is a flow diagram of the process for generating a matrix barcode in accordance with another embodiment of the present invention.

The person skilled in the art will appreciate that the embodiment has been presented for purposes of illustration and description, and is not intended to be exhaustive nor limiting the invention in the form disclosed. Many modifications and variations will be apparent to those of ordinary skill in the art. The embodiment was chosen and described in order to best explain the principles of the invention, the practical application, and to enable others of ordinary skill in the art to understand the invention for various embodiments with various modifications as are suited to the particular use contemplated. As recall, the invention offers a simple solution to easily transfer 3D models from a mobile device to a target computer by having to send a short request comprising few data including a session ID and a model ID to a server to initiate the transfer.

It has to be appreciated that while the invention has been particularly shown and described with reference to a preferred embodiment, various changes in form and detail may be made therein without departing from the spirit, and scope of the invention. The invention may be advantageously applicable as a transfer service within an intranet enterprise instead of using a USB key, allowing to cast a 3D model from a mobile device to a computer terminal.

The present invention can take the form of a computer program product accessible from a computer-usable or computer-readable medium providing program code for use by, or in connection with a computer or any instruction execution system. For the purposes of this description, a computer-usable or computer-readable medium can be any tangible apparatus that can contain, store, communicate, propagate, or transport the program for use by, or in connection with the instruction execution system, apparatus, or device. The medium can be an electronic, magnetic, optical, electromagnetic, infrared, or semiconductor system (or apparatus or device) or a propagation medium. Examples of a computer-readable medium include a semiconductor or solid state memory, magnetic tape, a removable computer diskette, a random access memory (RAM), a read-only memory (ROM), a rigid magnetic disk and an optical disk. Current examples of optical disks include compact disk - read only memory (CD-ROM), compact disk - read/write (CD-R/W) and DVD.

## Claims

1. A computer-implemented method of transferring to a target device a 3D model displayed on a mobile device, the method comprising the steps of:
- detecting at a mobile device a trigger operation for activating a model transfer application to transfer a 3D model;
- scanning by the mobile device a matrix barcode displayed at a target device;
- decoding a session identifier from the matrix barcode scan;
- initiating a transfer session with a remote server using the session identifier and a model identifier of the 3D model; and
- downloading to the target device model files associated to the model identifier from the remote server.

2. The method of claim 1 wherein initiating a session with the remote server comprises sending by the mobile device a request to the remote server to transfer a model, the request comprising at least the session identifier and a model identifier of the 3D model.

3. The method of claim 2 wherein downloading the model files from the remote server comprises:
- sending by the remote server to the target device a push notification including the model identifier; and
- receiving a request from the target device for sending the model files associated to the model identifier.

4. The method of claim 3 wherein the request received from the target device is a HTTPS request.

5. The method of anyone of claims 1 to 4 wherein the session identifier is a unique session identifier encoded on the matrix barcode at the target device.

6. The method of anyone of claims 1 to 5 wherein the matrix barcode is a quick response (QR) code.

7. The method of anyone of claims 1 to 6 further comprises before the scanning step:
- sending by the target device a request to the remote server to access a model transfer web application; and
- upon receiving the application access, displaying in a browser of the target device a matrix barcode, the matrix barcode having a session identifier encoded therein.

8. The method of claim 7 wherein displaying the matrix barcode comprises:
- sending a request to the remote server to initiate a session;
- receiving a session identifier; and
- encoding the session identifier in a matrix barcode.

9. The method of claims 7 or 8 wherein the request to access the model transfer web application is a HTTPS request.

10. The method of anyone of claims 1 to 9 further comprising after the downloading step, a step of computing a rendering of the 3D model.

11. The method of anyone of claims 1 to 10 applied for transferring a digital resource from a mobile device to a target device.

12. A computer program comprising instructions for carrying out the steps of the method according to any one of claim 1 to 11 when said computer program is executed on a suitable computer device.

13. A system comprising means adapted to carry out the steps of the method according to any one of claims 1 to 11.
